# EUROPEAN PATENT APPLICATION

(11) **EP 1 715 304 A1**
(43) Date of publication of application: **25.10.2006**
(21) Application number: 05103059.1
(22) Date of filing: 18.04.2005
(51) Int. Cl.: G01F 23/292

(54) **Fluid level detection by reflecting a beam at a meniscus**

(71) Applicant: Agilent Technologies, Inc., Palo Alto, CA 94306 (US)
(72) Inventor: RAPP, Holger, 76337, Waldbronn (DE)
(74) Representative: Barth, Daniel Mathias

(57) **Abstract**

A device (100) for determining a level (101) of a fluid (102) in a container (103), wherein a surface (104) of the fluid (102) has a meniscus (105), wherein the device (100) comprises a determining unit (106) adapted to determine the level (101) of the fluid (102) in the container (103) using an electromagnetic radiation beam (107) reflected at the meniscus (105) as detection signal.

## Description

### BACKGROUND ART

The present invention relates to fluid level detection by reflecting a beam at a meniscus.

WO 2004/036154 A1 discloses a device for measuring the level of a liquid in a container, comprising a light source, a light detector and a liquid container which may be arranged in a light path between the light source and the light detector. A dip may occur at a particular position of a detection signal, wherein a fluid level is being derived from the position of the dip.

DE 100 39 765 A1 discloses an apparatus for optical determination of a filling height of a filling medium in a tank, comprising a light emitting unit, a light receiving unit and a signal processing unit. A light signal transmitted from the light emitting unit and passing the filling medium or a portion above impinges on the light receiving unit and may be used as a detection signal.

WO 99/20983 A2 discloses a metering assembly using light refraction to determine the liquid level in a metering container.

### DISCLOSURE OF THE INVENTION

It is an object of the invention to provide an improved fluid level detecting. The object may be solved by the independent claims. Exemplary embodiments are shown by the dependent claims.

According to an exemplary embodiment of the present invention, a device for determining a level of a fluid in a container is provided, wherein a surface of the fluid has a meniscus, wherein the device may comprise a determining unit adapted to determine the level of the fluid in the container using an electromagnetic radiation beam reflected at the meniscus as detection signal.

According to another exemplary embodiment of the present invention, an apparatus for determining a level of a fluid is provided, wherein the apparatus may comprise a container for containing fluid, wherein a surface of contained fluid has a meniscus. The apparatus may further comprise a device having the above-mentioned features for determining a level of a fluid in the container.

According to another exemplary embodiment of the present invention, a fluid separation system adapted for separating compounds of a fluid is provided. The fluid separation system may comprise a fluid delivering unit adapted for delivering the fluid contained in at least one container, a separation unit adapted for separating compounds of the fluid and to provide at least one separated component in at least one further container, and at least one device having the above-mentioned features for determining a level of a fluid in at least one of the at least one container and/or in at least one of the at least one further container. Such a fluid separation system may be realized as an HPLC (High Performance Liquid Chromatography) apparatus.

According to another exemplary embodiment of the present invention, an analysis system for analyzing a sample is provided, the analysis system comprising a fluid delivering unit for delivering fluid which is contained in at least one container, an analysis unit adapted for analyzing the sample using the fluid which is contained in the at least one container, and at least one device having the above mentioned features for determining a level of fluid in at least one of the at least one container. Such an analysis system may be realized as a chemical analysis system and/or may work on the basis of capillary electrophoresis.

According to still another exemplary embodiment of the present invention, a method of determining a level of a fluid in a container is provided, wherein a surface of the fluid has a meniscus, wherein the method may comprise the step of determining the level of the fluid in the container using an electromagnetic radiation beam reflected at the meniscus as detection signal.

According to yet another exemplary embodiment of the present invention, a computer-readable medium may be provided, in which a computer program of determining a level of a fluid in a container, wherein a surface of the fluid has a meniscus, is stored, which computer program, when being executed by a processor, may be adapted to control or carry out the above-mentioned method step.

According to yet another exemplary embodiment of the present invention, a program element of determining a level of a fluid in a container, wherein a surface of the fluid has a meniscus, may be stored, which program element, when being executed by a processor, may be adapted to control or carry out the above-mentioned method step.

Embodiments of the invention can be partly or entirely embodied or supported by one or more suitable software programs, which can be stored on or otherwise provided by any kind of data carrier, and which might be executed in or by any suitable data processing unit. The fluid level detection according to the invention can be realized by a computer program, i.e. by software, or by using one or more special electronic optimization circuits, i.e. in hardware, or in hybrid form, i.e. by means of software components and hardware components.

One exemplary aspect of the invention can be seen in the fact that the reflection of an electromagnetic beam at a meniscus of a fluid, which meniscus may be formed due to surface adhesion in a border area between a liquid and a limiting wall of a container, is detected as a signal from which the fluid level in the container is derivable.

When a liquid or any similar filling good is filled in a container, the liquid in many cases automatically forms an essentially planar surface, wherein at the border of the liquid adjacent to the container walls, an arc-shaped meniscus may be formed. An electromagnetic radiation beam may be emitted (for instance essentially perpendicularly to the planar surface of the fluid) towards the meniscus at the surface of the liquid, wherein the geometric shape of the fluid in the meniscus region may allow a significant angling off of the electromagnetic radiation beam resulting from a reflection or deflection of the beam at the meniscus of the fluid. A detector may be located at a corresponding position at which a beam reflected by the meniscus would be expected when the fluid in the container has a particular height.

In contrast to this, when the electromagnetic radiation beam impinges essentially perpendicularly on a part of the essentially planar surface of the fluid, the reflection angle will be essentially 180°, and no significant change in the propagation direction of the beam will be detectable. Arranging one or more detectors at a position at which a beam reflected at the meniscus would be expected at a particular filling level, may allow to determine the height of the fluid, since the position of the reflection and thus the position of the reflected electromagnetic radiation beam may depend sensitively on the height of the fluid in the container.

It is noted that the described geometry is just exemplary and that any other angle configuration is possible as well. However, the configuration should be so that reflection of the electromagnetic radiation occurs (preferably only) at the meniscus, not at plane portion of the fluid surface.

The detection method according to the described embodiment of the invention is easy to implement, cheap in use and very error-robust. This method may be applied particularly to fluids and containers being transparent for the employed electromagnetic radiation, but may also be used with non-transparent fluids and/or containers, for instance when the electromagnetic radiation beam is emitted towards the meniscus in a manner that the electromagnetic radiation beam does not have to travel through the fluid and/or the container before being detected (for instance when source and detector are located above the fluid level).

The term "fluid" may particularly denote any kind of filling good, more particularly any liquid or any mixture of a liquid with solid and/or gaseous particles, and also includes granulate material or the like, provided that the filling good forms a meniscus when contained in a container.

The use of an electromagnetic radiation beam as a detection signal propagating through and being reflected by a fluid may allow a contact-free measurement. This may be advantageous particularly when the fluid level of chemical or biochemical materials shall be measured which may be chemically aggressive, hazardous or very sensitive. Further, this may be advantageous, since a container (being full or being empty) can be replaced by simply removing the container from the apparatus without the necessity to modify the arrangement of the components of the fluid level detection device.

A particular exemplary application field of the fluid level detection system according to the invention is an apparatus for life science applications, for instance in a high throughput apparatus for pharmaceutical screening, where a plurality of liquids may be mixed, brought into reaction, separated, or analyzed. In such an apparatus, educt liquids may be provided in containers, product liquids may be provided in other containers, and usually also a waste container is provided. However, the capacity of such containers is limited. When a measurement or analysis takes a long time (for instance shall be run over night or over weekend), it may be desired to know how long the capacity of the containers will hold. For this purpose, the fluid level detection system according to the invention may be implemented in such a chemical analysis device to automatically determine in advance how long the apparatus can be run without the necessity to empty or refill the containers.

The device according to the invention may be integrated in an analysis device, but may also be provided as a separate device.

The capacities of the containers being subject of a measurement according to the invention can vary in a very large range which may include large volumes like litres or hectolitres and more, and which may range to very small volumes of millilitres, microlitres or nanolitres and less. However, a preferred range of fluid level detection volumes according to the invention is between 1 ml and 10 litres. It is noted that the invention is not limited to any range of volumes or sized, but can be implemented with any container sizes and/or fluid volumes, provided that a meniscus occurs at a surface of the fluid.

It may be particularly advantageous that the fluid level detection with the system according to the invention may be free from any sensor which has to be brought in direct mechanical contact with the liquid, since this allows to keep the liquids clean and may avoid that measurements or analytical investigations are falsified by the fluid level detection. By performing an electromagnetic beam reflection measurement, a cheap and reliable detection is enabled without influencing properties of the fluid.

The electromagnetic radiation source may be realized as a light emitting source which may be, for instance, a light emitting diode (LED). However, implementing electromagnetic radiation sources using different wavelengths than optical wavelengths are possible, for instance in the infrared or ultraviolet range. There may be one or more of such electromagnetic radiation sources which may either be provided movably to scan a predetermined spatial range or which may be provided spatially fixed so that an array of such electromagnetic radiation sources may cover a spatial area corresponding to a range of expected filling levels. The electromagnetic radiation source(s) can be provided separate from the container (for instance outside the latter) or may be attached (for instance adhered) to the container.

The electromagnetic radiation detector may be any kind of detector which is sensitive to electromagnetic radiation, like a photodiode, a CCD ("charge coupled device"), a camera or the like. Such detectors are very cheap so that the fluid level detection system according to the invention can be manufactured with low cost.

To further improve the sensitivity of the system, an underground correction can be carried out. For this purpose, the detection signal of the electromagnetic radiation detector(s) may be measured with the electromagnetic radiation source(s) being switched on and switched off. By calculating a difference detection signal between operation states of the radiation source(s) being switched on and switched off may allow to remove or suppress disturbing underground effects so that the signal-to-noise ratio of the detection system can be significantly improved. Thus, a robust, cheap and reliable measurement may be performed.

According to an embodiment of the invention, a signal reflected by the meniscus may be measured and evaluated. This may allow a qualitative or a quantitative analysis of the fluid level.

In the following, further exemplary embodiments of the device for determining a level of a fluid in a container will be described. However, these embodiments also apply for the apparatus and the method for determining a level of a fluid in a container, for the fluid separation system, for the computer-readable medium and for the program element.

The device may comprise an electromagnetic radiation source for emitting the electromagnetic radiation beam. Such an electromagnetic radiation source may be capable of emitting an electromagnetic radiation beam in a predetermined direction. A spatially focussed beam may particularly be obtained by providing an aperture, for instance a lens aperture.

The electromagnetic radiation source may be adapted to emit a visible light beam, an infrared light beam or an ultraviolet beam as the electromagnetic radiation beam. The invention is not restricted to any particular range of wavelengths but is relatively independent from the wavelength provided that a beam of a particular wavelength is reflectable by a meniscus of a fluid.

The electromagnetic radiation source may be movable to emit the electromagnetic radiation beam to a region of positions in accordance with such a motion of the electromagnetic radiation source. When the electromagnetic radiation source is moved and one or more electromagnetic radiation detectors remain(s) stationary, the motion of the electromagnetic radiation source allows to scan a portion from which it is expected that it may result in a detection signal due for a present fluid level.

By providing the electromagnetic radiation source(s) movably or shiftably, it may be possible to reduce the number of electromagnetic radiation sources, allowing to manufacture the device in a cheap manner.

Additionally or alternatively, the electromagnetic radiation source may be divided into a plurality of (for instance immovable) electromagnetic radiation source units, each of which being adapted to emit an electromagnetic radiation beam to a respective position. By providing more than one electromagnetic radiation sources, movable parts may be dispensable or the number of movable can be reduced, allowing to construct a simplified device.

The electromagnetic radiation source units may be arranged to form a one-dimensional source array or a two-dimensional source array. A one-dimensional source array may be a straight line formed by linearly arranged electromagnetic radiation sources. A two-dimensional source array may be a matrix-like arrangement of the electromagnetic radiation sources.

The device according to embodiments of the invention may further comprise an electromagnetic radiation detector for detecting the electromagnetic radiation beam.

This electromagnetic radiation detector may be movable to detect the electromagnetic radiation beam, reflected at the meniscus, in a region of positions in accordance with a motion of the electromagnetic radiation detector. Again, by providing the electromagnetic radiation detector(s) in a shiftable or movable manner, it may be possible to sample or scan a portion at which a reflected electromagnetic radiation beam is expected. This may allow to reduce the number of movable parts needed.

Additionally or alternatively, the electromagnetic radiation detector may be divided into a plurality of (for instance immovable) electromagnetic radiation detector units, each being adapted to detect an electromagnetic radiation beam, reflected at the meniscus, at a respective position. The provision of a plurality of electromagnetic radiation detector units provided stationary allows to reduce the number of movable parts, particularly it may be possible to avoid movable parts at all.

Again, the electromagnetic radiation detector units may be arranged to form a one-dimensional detector array or a two-dimensional detector array. A one-dimensional array may be a line of detector units, and a two-dimensional detector array may be a matrix-like configuration of detector elements, like a CCD.

Particularly, the determining unit may be adapted to determine the level of the fluid based on a first position at which the electromagnetic radiation source is located when emitting the electromagnetic radiation beam to the meniscus and based on a second position at which the electromagnetic radiation detector is located when detecting the electromagnetic radiation beam emitted by the electromagnetic radiation source and reflected by the meniscus. Such a determining unit may be realized, for instance, using a microprocessor like a CPU (Central Processing Device) which receives, as detection information, the position of the (presently active) emitting unit and detecting unit. The combination of these two pieces of information may allow to detect a fluid level taking into account simple geometrical considerations and relations of the detected beam reflected at the meniscus in dependence on the fluid height. However, it is also possible to detect signals of a plurality of electromagnetic radiation detector units and to decide, based on detected intensity information, at which position the fluid level is presently located.

According to an exemplary embodiment of the invention in which one of the components "electromagnetic radiation source" and "electromagnetic radiation detector" is located below and the other of these components is located laterally of a container, the knowledge of the position of the component arranged laterally of the container may be sufficient for deriving the fluid level. This is valid for the case that the electromagnetic radiation source is located laterally of the container and the electromagnetic radiation detector is located below the container, as well as for a geometry with inverted course of the beam in which the electromagnetic radiation detector is located laterally of the container and the electromagnetic radiation source is located below the container.

According to embodiments of the invention, the determining unit may be adapted to determine the level of the fluid in the container including an underground signal correction. Since electromagnetic radiation may be present in any environment as background radiation, for instance daylight in a lab, such an underground signal may disturb the measurement. In order to suppress such effects, the underground signal may be measured in the absence of an electromagnetic radiation beam generated by the electromagnetic radiation source. After having switched on the electromagnetic radiation beam, sum of the underground signal plus the detection signal is measured. By subtracting the two signals it may be possible to obtain a signal free from underground effects.

The device according to embodiments of the invention may be integrated in an analysis device for chemical, biological and/or pharmaceutical analysis. Such an analysis device may be a fluid separation system, a liquid chromatography system, an electrophoresis system, or the like.

In the following, exemplary embodiments of an apparatus for determining a level of a fluid will be described. However, these embodiments also apply for the device and for the method for determining a level of a fluid in a container, for the fluid separation system, for the computer-readable medium and for the program element.

The apparatus may comprise an electromagnetic radiation source for emitting the electromagnetic radiation beam and may comprise an electromagnetic radiation detector for detecting the electromagnetic radiation beam. The electromagnetic radiation source may be located below the container, and the electromagnetic radiation detector may be located laterally of the container. Alternatively, the electromagnetic radiation source may be located laterally of the container and the electromagnetic radiation detector may be located below the container. In other words, the light path may be reversed. Further alternatively, the electromagnetic radiation source and the electromagnetic radiation detector may be both located above the fluid level, for instance above the container. The latter configuration may be particularly advantageous, since the measurement can be carried out easily regardless of any transparent properties of the liquid and/or the container.

However, the described geometrical configurations are merely exemplary, and any other arrangement is possible.

### BRIEF DESCRIPTION OF DRAWINGS

Objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Figs. 1-7 show embodiments of an apparatus for determining a level of a fluid in a container.

Fig. 8 shows a detailed view of light beams reflected at a meniscus of a fluid in a container.

Fig.9 shows a diagram illustrating a measured spectrum from which a fluid level may be derived.

Fig. 10 shows a fluid separation system adapted for separating compounds of a fluid according to an exemplary embodiment of the invention.

Fig. 11 shows an analysis system for analyzing a sample according to an exemplary embodiment of the invention.

The illustration in the drawing is schematically.

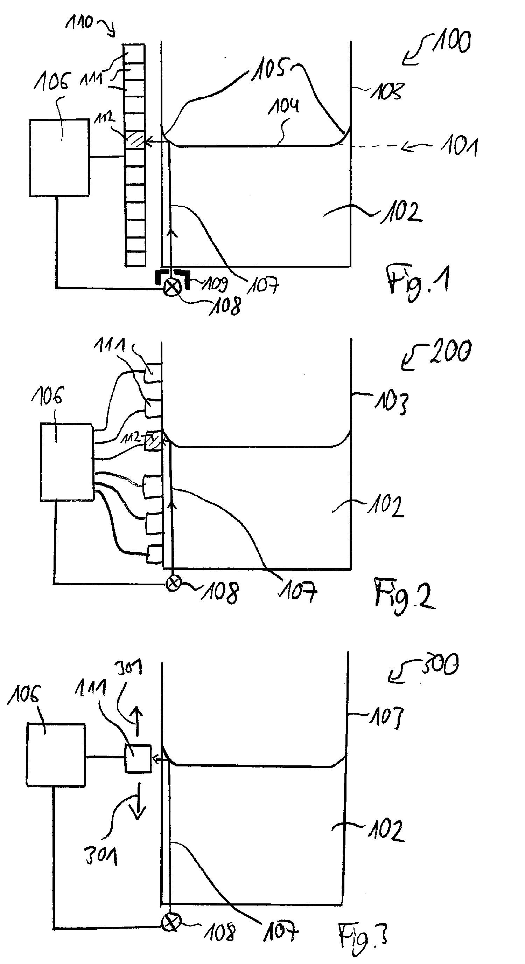

In the following, referring to **Fig. 1**, a device 100 for determining a level 101 of a fluid 102 in a container 103, which may be a beaker or tumbler made of transparent glass, according to an exemplary embodiment of the invention will be described.

As a consequence of capillary force effects, a surface 104 of the biochemical liquid 102 does not only have a planar central portion, but also has a meniscus 105 at a portion of the fluid surface 104 adjacent to the container 103.

The device 100 further comprises a processor 106 adapted to determine the level 101 of the fluid 102 in the container 103 using a light beam 107 reflected at the meniscus 105 as detection signal.

More particularly, the device 100 comprises a light emitting diode 108 (LED) as an electromagnetic radiation source for emitting the optical beam 107. Optionally, an aperture 109 may be provided to generate a parallel and focussed light beam 107. The light emitting diode 108 emits visible light.

Further, the device 100 comprises a one-dimensional array 110 of photodiodes 111 as light detection elements. In other words, a plurality of immovable light detecting units 111 are provided laterally of the container 103 and are adapted to detect a light beam 107 reflected at the meniscus 105 at a respective position.

The light emitting diode 108 and the photodiodes 111 are both couple with the processor 106 which controls the light emitting diode 108 and the photodiodes 111 and which may determine which of the photodiodes 111 has actually detected a light beam 107.

The light emitting diode 108 is arranged below the container 103. According to the described embodiment, both the liquid 102 and the container 103 are optically transparent. In the present case, as a consequence of the fluid level 101, only a particular one of the light detectors 111, namely an active light detector 112 detects a signal. As can be taken from Fig. 1, the position of the active light detecting element 112 in the one-dimensional array 110 already contains the fluid level information. Thus, by receiving the signal from the activated light detector 112, the processor 106 can unambiguously determine the fluid level.

In the following, referring to **Fig. 2**, a device 200 for determining a level of a fluid 102 in a container 103 according to another exemplary embodiment of the invention will be described.

A main difference between the device 200 and the device 100 is that, in the device 200, the light detecting elements 111, 112 are provided as individually providable units which are adhered to the wall of the container 103.

In the following, referring to **Fig. 3**, a device 300 for determining a level of a fluid 102 in the container 103 according to another exemplary embodiment of the invention will be described.

A main difference between the device 300 and the device 100 is that, instead of providing a plurality of immovable light detecting units 111, the device 300 has only a single light emitting element 111 which can be moved along the direction of arrows 301 to one-dimensionally sample, in a vertical direction according to Fig. 3, a position of the reflected light beam 107. A position at which the light detecting unit 111 detects a signal is characteristic for the present fluid level.

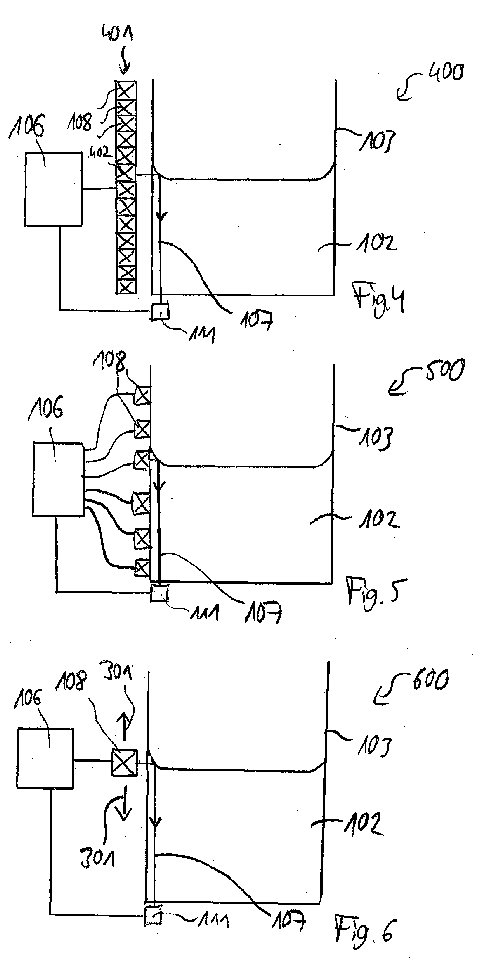

In the following, referring to **Fig. 4**, a device 400 for determining a level of the fluid 102 in the container 103 accordi ng to another exemplary embodiment of the invention will be described.

In Fig. 1 to Fig. 3, the light emitting unit 108 is arranged below the container 103, the detecting unit(s) 111 being arranged laterally of the container 103. In contrast to this, according to Fig. 4, a single light detecting unit 111 is provided and arranged below the container 103, and a one-dimensional array 401 of a plurality of light emitting diodes 108 is provided laterally of the container 103. When the light emitting units 108 emit an electromagnetic radiation beam in an essentially horizontal direction according to Fig. 4, only a single of the light emitting units 108, namely the light emitting unit 402, may generate an electromagnetic radiation beam 107 which is reflected at the meniscus 105 of the fluid 102 and may therefore impinge on the detector 111. By subsequently and individually activating the light emitting units 108 one after the other, it can be detected by the processor 106 at which height the fluid level is presently located, since, for each height, only one of the light emitting diodes 108 is capable to generate a detection signal at the position of the detector 111.

In the following, referring to **Fig. 5**, a device 500 for determining a level of a fluid 102 in a container 103 according to an exemplary embodiment of the invention will be described.

The device 500 differs from the device 400 essentially in that the various light emitting units 108 are directly attached (for instance adhered) to a lateral wall of the container 103 and are provided as individual light emitting diodes, in contrast to a complete array 401.

In the following, referring to **Fig. 6**, a device 600 for determining a level of a fluid 102 in a container 103 according to an exemplary embodiment of the invention will be described.

The configuration of Fig. 6 differs from the configuration in Fig. 4 essentially in that, instead of providing a plurality of array-like arranged light emitting diodes 108, only a single light emitting diode 108 is provided according to Fig. 6 which is movable along a vertical direction 301. Only at a particular position of the light emitting diode 108 at which its emitted light beam 107 is reflected by the meniscus 105 of the fluid 102, a detection signal can be detected by the detector 111 arranged below the container 103.

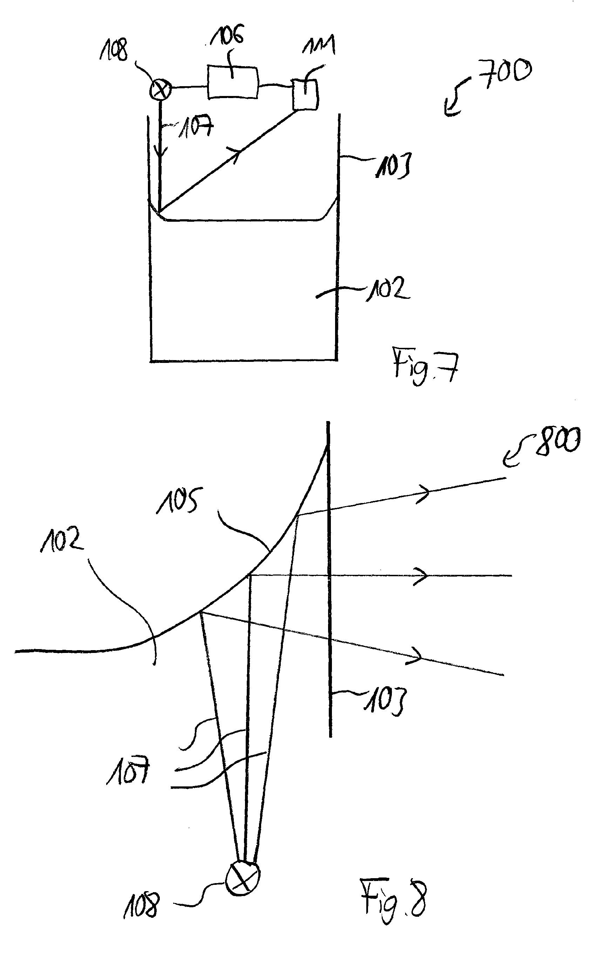

In the following, referring to **Fig. 7**, a device 700 for determining a level of a fluid 102 in a container 103 according to another exemplary embodiment of the invention will be described.

The embodiment of Fig. 7 allows to detect a fluid level also in case of a non-transparent fluid 102 and/or a non-transparent container 103. Both, the light emitting diode 108 and the detector 111 are located above the container 103. In more detail, the light emitting diode 108 and the detector 111 are both located above the surface of the fluid 102, and a signal emitted by the light emitting diode 108 and reflected by the meniscus 105 of the fluid 102 is detectable by the detector 111 only when the latter is located at a particular position. Thus, the detector 111 is provided movable along a horizontal and/or vertical direction according to Fig. 7. Only at characteristic positions of the detector 111, the beam 107 reflected by the meniscus 105 is detectable, allowing to derive the current fluid level. The characteristics and direction of this signal allows to determine the height of the fluid 102. Of course, the position of source 108 and detector 111 may be exchanged.

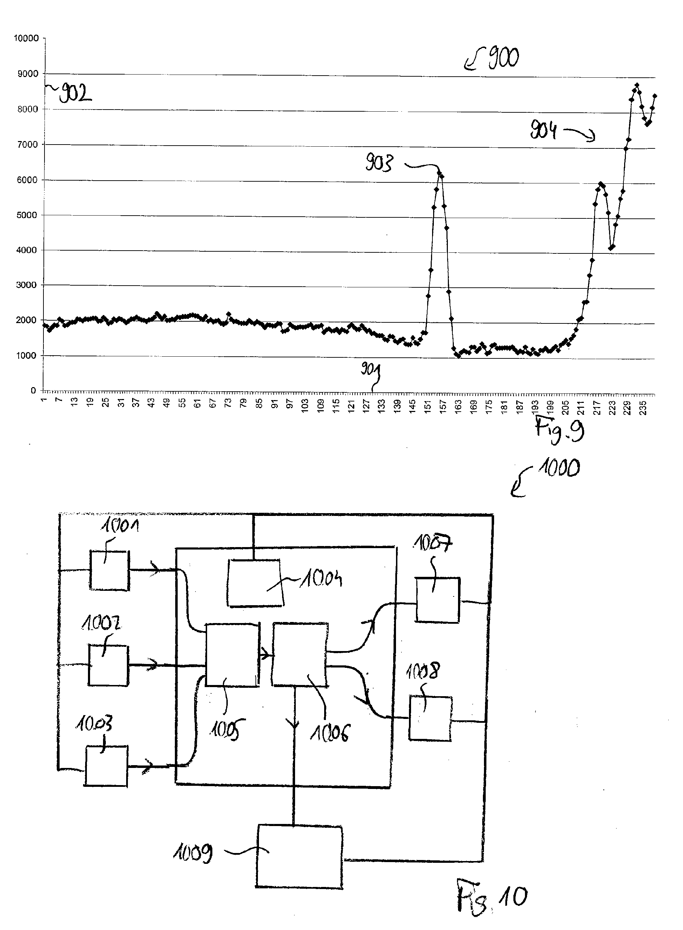

In the following, referring to **Fig. 8**, a detailed view of light reflected at the meniscus 105 will be described.
As is shown, only in the portion of the meniscus 105, light beams 107 generated by the light emitting diode 108 are reflected to the lateral side of the container 103 where a detector (not shown) may detect these signals. The direction to which the signals 107 are essentially reflected is a direct measure for the height of the fluid 102. The accurate direction in which the signal is reflected may be particularly relevant for the geometry according to the embodiment of Fig. 7. For the embodiments of Figs. 2, 3, 5 and 6, the position may be relevant. For the embodiments of Figs. 1 and 4, the position and the direction may be useful.

In the following, referring to **Fig. 9**, a diagram 900 illustrating a measured spectrum from which a fluid level may be derived will be explained.

Along an abscissa 901 of the diagram 900, a vertical coordinate related to the vertical position of the light detectors 111 of Fig. 1 are plotted. Along an ordinate 902 of the diagram 900, the intensity of light measured by the respective of the light detectors 111 is plotted.

A signal peak 903 can be identified and clearly resolved from the measured spectrum 900 which relates to a light beam emitted by the light emitting diode 108, reflected by the meniscus 105 of the fluid 102 being located at the current filling level and measured by particular light detectors 111.

Particularly in a scenario in which a signal peak 903 cannot be identified easily or not with sufficient accuracy from the measured spectrum, it is possible to assist the signal peak detection by implementing mathematical methods or image processing methods, for instance by performing a least squares fit of the measured spectrum assuming, for instance, a Gauss function, a Lorentz function or a convolution of a Gauss function with a Lorentz function.

On the right-hand side of the diagram 900, artefacts 904 are visible which are believed to originate from undesired scattering at a bottom of the container 103. However, by optimizing the shape and the surface of the container 103 and/or by particularly limiting the measurement region to a range of filling levels in which no artefacts 904 occur (for instance values lower than 200 on the abscissa 1101), disturbing artefacts 904 can be suppressed or eliminated.

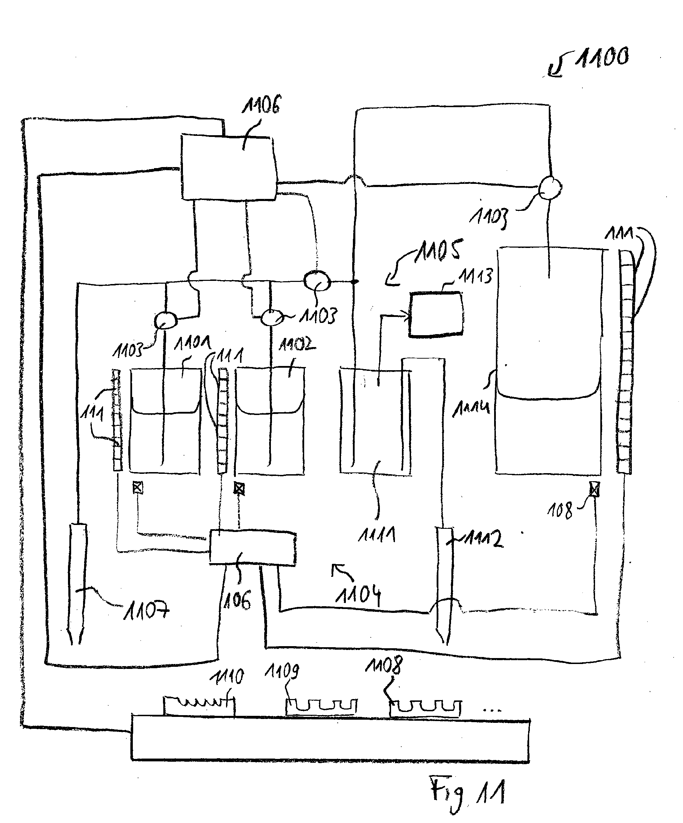

In the following, referring to **Fig. 10**, a fluid separation system 1000 according to an exemplary embodiment of the invention will be described. 10

The fluid separation system 1000 is adapted to separate different compounds of fluids.

Particularly, a plurality of educt containers 1001, 1002, 1003 are provided, wherein each of the educt substances 1001 to 1003 are filled in a container. The fluid level of the containers may be of interest. In order to measure the respective fluid levels, the educt containers 1001 to 1003 are provided with a fluid detection device 1004.

The fluid separation system 1000 comprises a fluid delivering unit 1005 adapted for delivering the fluid contained in the containers 1001 to 1003. Particularly, the fluids in the containers 1001 to 1003 may be mixed or brought into reaction with one another in the fluid delivering unit 1005 according to a predetermined analysis scheme.

Fluids processed in this manner is supplied to a separation unit 1006 for analyzing, treating and further processing the mixed fluids delivered from the fluid delivering unit 1005, for separating different compounds and to provide the separated components in further containers 1007, 1008. According to the described embodiment, a first product container 1007 is provided in which a first separated fluid is delivered. In a second product container 1008, a second separated fluid is provided. Waste fluid is provided to a waste container 1009.

Each of the containers 1001 to 1003, 1007 to 1009 is coupled to the fluid level detection device 1004 so that the device 1004 is capable to detect and monitor the level of the fluids in each of these containers 1001 to 1003, 1007 to 1009. If the fluid level of any of the educt containers 1001 to 1003 becomes too low, an alarm signal may be generated by the device 1004. If any of the fluid levels of the product containers 1007 to 1009 becomes too high, an alarm signal may be generated by the device 1004.In the following, referring to **Fig. 11**, an analysis system 1100 according to an exemplary embodiment of the invention will be described.

The analysis system 1100 for analyzing a sample comprises a fluid delivering unit 1105 (replenishment station) for delivering fluid which is contained in two containers 1101, 1102. Container 1101 contains water, and container 1102 contains buffer (for instance a phosphate buffer or a Tris buffer). Using a vacuum pump 1113, hose pumps 1103 and a needle or capillary 1107, fluids of the containers 1101, 1102 may be brought in contact to a sample to be analysed. Such a sample may be provided in a sample well plate 1108. Reagents may be provided in a reagent well plate 1109. Furthermore, an analysis chip 1110 is provided. The vacuum pump 1113 is coupled with a vacuum chamber 1111 which, additionally, is coupled to a further needle 1112.

Further, an analysis unit 1106 is provided and adapted for analyzing the sample using the fluid which is contained in the two containers 1101, 1102. The analysis unit 1106 may bring the well plates 1108, 1109 and the analysis chip 1111 to the needles 1107, 1112, by correspondingly controlling a robot (not shown).

A waste container 1114 is provided for receiving waste fluid accumulated during the analysis.

Furthermore, a device 1104 is provided for determining a level of fluid in the two containers 1101, 1102 and in the waste container 1114. The device 1104 is realized similarly like the device 100 but comprises a single processor 106 for controlling the measurement of the filling level of each of the containers 1101, 1102, 1114.

The analysis system 1100 may be realized on the basis of a 5100 Automated Lab-on-a-Chip Platform of Agilent Technologies and may allow unattended analysis of samples provided in well plates 1108 (for instance 96 or 384 formats). Sample loading, sample handling, analysis, detection and data analysis, everything may be integrated in one automated system. Applications are control of PCR (polymerase chain reaction), verification of quality of DNA libraries, screening of DNA fragments and patterns, and identification, sizing and quantization of proteins.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. A device (100) for determining a level (101) of a fluid (102) in a container (103), wherein a surface (104) of the fluid (102) has a meniscus (105),
wherein the device (100) comprises a determining unit (106) adapted to determine the level (101) of the fluid (102) in the container (103) using an electromagnetic radiation beam (107) reflected at the meniscus (105) as detection signal.

2. The device (100) of claim 1,
comprising an electromagnetic radiation source (108) for emitting the electromagnetic radiation beam (107) and/or comprising an electromagnetic radiation detector (111) for detecting the electromagnetic radiation beam (107).

3. The device (100) of claim 2, comprising at least one of the following features:
the electromagnetic radiation source (108) is adapted to emit a visible light beam, an infrared beam or an ultraviolet beam as the electromagnetic radiation beam (107);
the electromagnetic radiation source (108) is movable to emit the electromagnetic radiation beam (107) to a region of positions in accordance with a motion of the electromagnetic radiation source (108);
the electromagnetic radiation source (108) is divided into a plurality of immovable electromagnetic radiation source units, each adapted to emit an electromagnetic radiation beam (107) to a respective position;
the electromagnetic radiation source (108) is divided into a plurality of immovable electromagnetic radiation source units, each adapted to emit an electromagnetic radiation beam (107) to a respective position, wherein the electromagnetic radiation source units are arranged to form a one-dimensional source array (401) or a two-dimensional source array;
the electromagnetic radiation detector (111) is movable to detect the electromagnetic radiation beam (107), reflected at the meniscus (105), in a region of positions in accordance with a motion of the electromagnetic radiation detector (111);
the electromagnetic radiation detector (111) is divided into a plurality of immovable electromagnetic radiation detector units, each adapted to detect an electromagnetic radiation beam (107), reflected at the meniscus (105), at a respective position;
the electromagnetic radiation detector (111) is divided into a plurality of immovable electromagnetic radiation detector units, each adapted to detect an electromagnetic radiation beam (107), reflected at the meniscus (105), at a respective position, wherein the electromagnetic radiation detector units are arranged to form a one-dimensional detector array (110) or a two-dimensional detector array (901).

4. The device (100) of claim 2 or any one of the above claims,
wherein the determining unit (106) is adapted to determine the level (101) of the fluid (102)
based on a first position at which the electromagnetic radiation source (108) is located when emitting the electromagnetic radiation beam (107) to the meniscus (105) and
based on a second position at which the electromagnetic radiation detector (111) is located when detecting the electromagnetic radiation beam (107) emitted by the electromagnetic radiation source (108) and reflected by the meniscus (105).

5. The device (100) of claim 1 or any one of the above claims, comprising at least one of the following features:
the determining unit (106) is adapted to determine the level (101) of the fluid (102) in the container (103) including an underground signal correction;
the device (100) is integrated in an analysis device (1200) for chemical, biological and/or pharmaceutical analysis.

6. An apparatus for determining a level (101) of a fluid (102), wherein the apparatus comprises
a container (103) for containing the fluid (102), wherein a surface (104) of the contained fluid (102) has a meniscus (105); and
a device (100) of claim 1 or any one of the above claims for determining the level (101) of the fluid (102) in the container (103).

7. The apparatus of claim 6,
wherein the device (100) comprises an electromagnetic radiation source (108) for emitting the electromagnetic radiation beam (107) and comprises an electromagnetic radiation detector (111) for detecting the electromagnetic radiation beam (107),
and wherein
the electromagnetic radiation source (108) is located below the container (103) and the electromagnetic radiation detector (111) is located laterally of the container (103); or
the electromagnetic radiation source (108) is located laterally of the container (103) and the electromagnetic radiation detector (111) is located below the container (103); or
the electromagnetic radiation source (108) and the electromagnetic radiation detector (111) are both located above the level (101) of the fluid (102).

8. A fluid separation system (1200) for separating compounds of a fluid, the fluid separation system (1200) comprising
a fluid delivering unit (1205) for delivering the fluid which is contained in at least one container (1201 to 1203);
a separation unit (1206) adapted for separating compounds of the fluid and to provide at least one separated component in at least one further container (1207 to 1209);
at least one device (1204) of claim 1 or any one of the above claims for determining a level of a fluid in at least one of the at least one container (1201 to 1203) and/or in at least one of the at least one further container (1207 to 1209).

9. An analysis system (1100) for analyzing a sample, the analysis system (1100) comprising
a fluid delivering unit (1105) for delivering fluid which is contained in at least one container (1101, 1102);
an analysis unit (1106) adapted for analyzing the sample using the fluid which is contained in the at least one container (1101, 1102);
at least one device (1104) of claim 1 or any one of the above claims for determining a level of fluid in at least one of the at least one container (1101, 1102).

10. A method of determining a level (101) of a fluid (102) in a container (103),
wherein a surface (104) of the fluid (102) has a meniscus (105), wherein the method comprises the step of
determining the level (101) of the fluid (102) in the container (103) using an electromagnetic radiation beam (107) reflected at the meniscus (105) as detection signal.

11. A computer-readable medium, in which a computer program of determining a level (101) of a fluid (102) in a container (103), or a program element of determining a level (101) of a fluid (102) in a container (103), is stored, which computer program or program element, when being executed by a processor, is adapted to control or carry out the method step of
determining the level (101) of the fluid (102) in the container (103), a surface (104) of the fluid (102) having a meniscus (105), using an electromagnetic radiation beam (107) reflected at the meniscus (105) as detection signal.
